# EUROPÄISCHE PATENTSCHRIFT

(11) **EP 3 089 135 B1**
(45) Veröffentlichungstag und Bekanntmachung des Hinweises auf die Patenterteilung: **10.01.2024**
(21) Anmeldenummer: 16166670.6
(22) Anmeldetag: 22.04.2016
(51) Int. Cl.: G08G 1/005, H04W 4/029, H04W 4/14, H04W 4/44, B60Q 1/48

(54) **WEGZEICHEN, FAHRZEUG UND VERFAHREN ZUM AUFFINDEN EINES AUFZUFINDENDEN OBJEKTS**
TRAFFIC SIGN, VEHICLE, AND METHOD FOR LOCATING AN OBJECT TO BE LOCATED
SIGNE INDICATEUR, VÉHICULE AUTOMOBILE ET PROCÉDÉ DE RECHERCHE D'UN OBJET

(30) Priorität: 29.04.2015 DE 102015005571
(43) Veröffentlichungstag der Anmeldung: 02.11.2016
(73) Patentinhaber: AUDI AG, 85045 Ingolstadt (DE)
(72) Erfinder: Altinger, Harald, 85049 Gerolfing (DE); Schuller, Florian, 85737 Ismaning (DE)
(74) Vertreter: Hofstetter, Schurack & Partner

(56) Entgegenhaltungen:
- DE-A1-102007 033 391
- DE-A1-102007 044 802
- DE-A1-102012 223 642
- DE-A1-102013 005 501
- DE-A1-102013 217 057
- US-A1- 2007 040 701
- US-A1- 2008 175 012
- US-A1- 2011 292 667

## Beschreibung

Die vorliegende Erfindung betrifft ein aufzufindendes Objekt mit einem Wegzeichen, das eine visuelle Anzeigeeinrichtung, eine Empfangseinheit und eine Aktivierungseinheit aufweist. Die Empfangseinheit ist zum Empfangen einer Aktivierungsaufforderung vorbereitet, und die Aktivierungseinheit ist zum Aktivieren der visuellen Anzeigeeinrichtung vorbereitet. Die visuelle Anzeigeeinrichtung kann beispielsweise eine Leuchte (insbesondere eine Lichtleiste oder Lichttapete) sein, die an einer Wand, in einem Geländer, in einem Boden oder an einer Decke befestigt oder dort eingelassen ist. Die Leuchte kann beispielsweise eine Parkplatzleuchte, eine Platzleuchte eines Einzelplatzerfassungssensors oder eine Zusatzleuchte sein, die in einer Fluchtwegleuchte eingebaut ist, oder eine Leuchte eines Fahrzeugs sein. Das Aktivieren der visuellen Anzeigeeinrichtung kann auch in einer vorübergehenden Erhöhung oder vorübergehenden Schwächung einer Intensität des Lichts bestehen, das die Leuchte abstrahlt.

Erfindungsgemäß, weist das aufzufindende Objekt eine Empfangseinheit zum Empfangen einer Heranführungsaufforderung und eine Sendeeinheit zum Senden einer Aktivierungsaufforderung an mindestens ein Wegzeichen auf. Das aufzufindende Objekt kann beispielsweise ein Landfahrzeug, ein Luftfahrzeug, ein Schiff, ein Personenkraftwagen, ein Lastkraftwagen, ein Bus, eine landwirtschaftliche Maschine oder eine Baumaschine sein. Alternativ kann das aufzufindende Objekt auch ein Stellplatz, oder ein Raum sein.

Darüberhinaus betrifft die Erfindung ein Verfahren zum Auffinden eines aufzufindenden Objekts. Hierbei wird in einem ersten Schritt eine Heranführungsaufforderung von einer Mobilstation an das aufzufindende Objekt übermittelt. In einem zweiten Schritt wird eine Aktivierungsaufforderung von dem aufzufindenden Objekt an mindestens ein Wegzeichen übermittelt. In einem dritten Schritt wird eine visuelle Anzeigeeinrichtung des visuellen Wegzeichens aktiviert.

Ein Fahrzeug, das auf einem großen Parkplatz (beispielsweise auf einem Messegelände) oder in einem Parkhaus (beispielsweise auf einem Flughafen) abgestellt ist, lässt sich häufig nur dann noch wiederauffinden, wenn die Stellplatznummer bekannt ist. Ein Fahrzeug wiederaufzufinden ist insbesondere für solche Fahrer schwierig, die das Fahrzeug von einem Leihwagenunternehmen oder einem anderen Fahrer übernehmen und deshalb keine Vorstellung von dem Abstellort des Fahrzeugs haben, weil sie es dort nicht abgestellt haben. Demnach ist es wünschenswert, einem Fahrzeugnutzer das Auffinden eines abgestellten Fahrzeugs zu erleichtern. Entsprechendes gilt für andere aufzufindende Objekte wie Personen, mit denen ein persönliches Treffen vereinbart wurde, für aufzufindende Räume innerhalb von Wohn- oder Geschäftgebäuden oder für Orte von Interesse (sogenannte points of interest = POI).

Die DE 10 2007 028 303 A1 beschreibt ein Mobilfunktelefon, das einen Standort speichert, an dem ein Benutzer ein Fahrzeug parkt und unter Entnahme des Mobilfunktelefons verlässt. Das Mobilfunktelefon ist dafür eingerichtet, dem Benutzer die Richtung und/oder die Entfernung zu dem Fahrzeug in Form einer skalaren oder vektoriellen Größe anzuzeigen. Das aus dieser Druckschrift bekannte Verfahren hat den Nachteil, dass während des Verfolgens der Route zum Auffinden des Fahrzeugs eine sonstige Nutzung des Mobilfunktelefons blockiert oder zumindest erschwert wird. Sofern der Nutzer nicht eine akustische Routenführung oder eine Datenbrille nutzt, muss er das Mobilfunktelefon während des Verfolgens der Route zum Auffinden des Fahrzeugs in der Hand halten, worin eine erhebliche Erschwernis besteht, wenn er eigentlich keine Hand dafür frei hat (beispielsweise, weil er zwei Koffer trägt oder bei Regen in der einen Hand einen Regenschirm hält und mit der anderen Hand einen Koffer trägt).

Die DE 10 2012 223 642 A1 schlägt zum Auffinden eines geparkten Fahrzeugs vor, Fahrzeuge, die sich entlang einer Route zu dem geparkten Fahrzeug befinden, so anzusteuern, dass sie Signale abgeben, aus denen der Verlauf der Route zu dem geparkten Fahrzeug erkennbar ist. Außerdem wird vorgeschlagen, entlang der Route ortsfeste Signalvorrichtungen vorzusehen, die routenspezifisch angesteuert werden, um Signale abzugeben, die den Weg der Route weisen. Die Ausgabe der Signale entlang der Route kann dynamisch erfolgen, so dass ein Lauflicht entsteht. Zwecks Zuordnung einzelner Routen zu verschiedenen Nutzern können den einzelnen Routen unterschiedliche Leuchtfarben zugewiesen werden. Das Verfahren kann auch zum Auffinden von Räumen oder Ansprechpartnern verwendet werden. Das aus dieser Druckschrift bekannte Verfahren hat den Nachteil, dass die Fremdfahrzeuge entlang der Route sehr komplexe technische Anforderungen erfüllen müssen, damit das zweite bekannte Verfahren überhaupt ausführbar ist.

In der US 2007/0040701 A1 ist ein Verfahren zum Erfassen freier Parklücken beschrieben. Bei dem Verfahren werden Daten zu einer Parklücke von einem Kraftfahrzeug bezogen. Die Daten umfassen dabei geographische Angaben zu der Parklücke. Die Daten freier Parklücken werden dabei in einer Datenbank gespeichert.

In der DE 10 2013 005 501 A1 ist ein Garderobensystem beschrieben, welches einen Kleiderbügel mit mehreren programmierbaren und fernsteuerbaren Leuchtmitteln aufweist. Die Leuchtmittel sind dabei derart an dem Kleiderbügel befestigt, dass sie nicht durch die, auf dem Kleiderbügel verwahrten, Gegenstände verdeckt werden. Dabei sind die Leuchtmittel oberhalb eines Bügelkörpers des Kleiderbügels angeordnet.

Die Offenlegungsschrift DE 10 2013 217 057 A1 beschreibt eine Fußgängerunterrichtungsvorrichtung. Die Fußgängerunterrichtungsvorrichtung beinhaltet eine Umgebungsobjekterfassungseinrichtung, eine Unterrichtungszielerfassungseinrichtung und eine Unterrichtungseinrichtung. Die Unterrichtungseinrichtung ist konfiguriert, um den Unterrichtungszielfußgänger darüber zu unterrichten, dass der Unterrichtungszielfußgänger durch die Unterrichtungszielerfassungseinrichtung erfasst wurde. So kann beispielsweise auf einer Straßenoberfläche eine Sichelform dargestellt werden, wo ein Fußgänger anwesend ist.

Die Druckschrift US 2008/0175012 A1 beschreibt eine alarmierende Beleuchtungsvorrichtung. Die alarmierende Beleuchtungsvorrichtung beinhaltet eine Erfassungskomponente, eine Komponente zum Einschätzen eines Gefährdungsgrades, eine Beleuchtungskomponente sowie eine dazugehörige Kontrollkomponente. Der Gefährdungsgrad für eine Person bezüglich eines Fahrzeugs wird ermittelt. Die Komponente zum Einschätzen der Gefahr basierend auf dem Gefährdungsgrad schätzt ein, ob die Person bezüglich des Fahrzeugs in Gefahr ist oder nicht. Auf die Fahrbahn wird Licht projiziert, welches eine Richtung der Person andeutet, welche in Gefahr vermutet wird.

Die Druckschrift US 2011/0292667 A1 beschreibt ein Fahrzeug mit zwei Rädern und einem Lichtsystem, das definierte Bilder auf einer Fahrbahn abbildet. Die Bilder können beispielsweise die Form von Polygonen oder Rechtecken haben. Mit Hilfe solcher statischer Bilder sollen Personen das Fahrzeug leichter finden können.

Die Offenlegungsschrift DE 10 2007 044 802 A1 beschreibt ein Verfahren zum Wiederauffinden eines Kraftfahrzeugs. Das Kraftfahrzeug ist dabei mit einem Navigationssystem ausgestattet. Ein Nutzer kann über ein mobiles Gerät eine Nachricht an das Kraftfahrzeug übermitteln. Die momentane Position des Kraftfahrzeugs wird auf Anfrage des Nutzers an dessen mitgeführtes Gerät übermittelt.

Es ist eine Aufgabe der vorliegenden Erfindung, einem Nutzer das Auffinden eines aufzufindenden Objekts, insbesondere eines geparkten Fahrzeugs, zu erleichtern und zugleich komplexe Anforderungen an Fremdfahrzeuge möglichst zu vermeiden.

Diese Aufgabe wird erfindungsgemäß durch ein aufzufindendes Objekt (insbesondere Fahrzeug) nach Patentanspruch 1 und ein Verfahren nach Patentanspruch 6 gelöst.

Das erfindungsgemäße aufzufindende Objekt umfasst ein Wegzeichen, welches eine visuelle Anzeigeeinrichtung, eine Empfangseinheit zum Empfangen einer Aktivierungsaufforderung mittels eines WLAN-Protokolls und eine Aktivierungseinheit zum Aktivieren der visuellen Anzeigeeinrichtung aufweist. Das aufzufindende Objekt ist als aufzufindendes geparktes Fahrzeug, als aufzufindender Stellplatz, als aufzufindender Raum oder als ein Mobiltelefon, das eine aufzufindende Person mit sich führt, ausgebildet. Im Rahmen der vorliegenden Erfindung wird mit 'WLAN-Protokoll' ein Protokoll der IEEE-802.11-Familie bezeichnet. In manchen Ländern ist statt WLAN auch der Begriff Wi-Fi üblich (welcher allerdings nicht eindeutig ist, da er irreführenderweise auch als Synonym für WLAN-Hotspots oder kabellosen Internetzugriff verwendet wird). Für das Übermitteln der Aktivierungsaufforderung kommt beispielsweise auch ein automotives WLAN-Protokoll in Betracht (beispielsweise nach einem WLAN-p-Standard).

Das aufzufindende Objekt weist eine Empfangseinheit und eine Sendeeinheit auf. Die Empfangseinheit ist zum Empfangen einer Heranführungsaufforderung von einer Mobilstation mittels einer Kurznachricht oder einer mobilen Internetverbindung vorbereitet. Die Sendeeinheit ist zum Senden einer Aktivierungsaufforderung mittels eines WLAN-Protokolls an mindestens ein Wegzeichen vorbereitet. Die mobile Internetverbindung kann beispielsweise eine Übertragung über ein soziales Netz oder per Email oder mit einem Zugriff auf eine Internetseite (insbesondere eine Internetseite des aufzufindenden Objekts, beispielsweise eine Internetseite eines Fahrzeugs) umfassen. Das Wegzeichen ist ferner dazu vorbereitet, ein Beleuchtungsfeld auf einen Weg zu projizieren, wobei eine Orientierung des Beleuchtungsfelds von einer Ortsangabe über einen eigenen Standort im Vergleich zu einer ersten Ortsangabe einer Mobilstation und einer zweiten Ortsangabe des aufzufindenden Objekts abhängig ist. Zusätzlich kann das Wegzeichen vorbereitet sein, das Beleuchtungsfeld auf den Weg zu projizieren, wobei eine Form des Beleuchtungsfelds von einer Ortsangabe über einen eigenen Standort im Vergleich zu einer ersten Ortsangabe einer Mobilstation und/oder einer zweiten Ortsangabe des aufzufindenden Objekts abhängig ist. Hierfür kann eine digitale Karte genutzt werden, wobei dies nicht zwingend ist. Durch die Abhängigkeit der Orientierung, oder der Orientierung und der Form des Beleuchtungsfeldes kann der Weg zum aufzufindenden Objekt nicht nur beleuchtet werden, sondern für den Nutzer auch eine Richtung zum aufzufindenden Objekt deutlicher angezeigt werden.

Außerdem wird ein Verfahren zum Auffinden eines aufzufindenden Objekts bereitgestellt, das folgende Verfahrensschritte aufweist. In einem ersten Schritt wird eine Heranführungsaufforderung von einer Mobilstation an das aufzufindende Objekt mittels einer Kurznachricht oder mittels einer mobilen Internetverbindung übermittelt. In einem zweiten Schritt wird mittels eines WLAN-Protokolls eine Aktivierungsaufforderung von dem aufzufindenden Objekt an mindestens ein Wegzeichen übermittelt. In einem dritten Schritt wird eine visuelle Anzeigeeinrichtung des mindestens einen Wegzeichens aktiviert. Mittels des Wegzeichens wird ferner ein Beleuchtungsfeld auf einen Weg projiziert, wobei eine Orientierung des Beleuchtungsfelds von einer Ortsangabe über einen eigenen Standort im Vergleich zu einer ersten Ortsangabe einer Mobilstation und einer zweiten Ortsangabe des aufzufindenden Objekts abhängig ist. Zusätzlich kann das Beleuchtungsfeld auf den Weg projiziert werden, wobei eine Form des Beleuchtungsfelds von einer Ortsangabe über einen eigenen Standort im Vergleich zu einer ersten Ortsangabe einer Mobilstation und/oder einer zweiten Ortsangabe des aufzufindenden Objekts abhängig ist.

Ein Konzept der Erfindung kann darin gesehen werden, dass das Übermitteln der Aktivierungsaufforderung an das mindestens eine Wegzeichen mittels eines WLAN-Protokolls erfolgt. Hierdurch wird für das Übermitteln der Aktivierungsaufforderung ein Übertragungsmedium verwendet, das von vielen Fahrzeugherstellern für Fahrzeug-zu-Fahrzeug-Kommunikation vorgesehen ist. Daher eignet es sich innerhalb der verfügbaren Alternativen am besten für das Versenden der Aktivierungsaufforderung von einem Fahrzeug zu einem Wegzeichen (das beispielsweise Teil eines anderen Fahrzeugs sein kann).

Es ist vorgesehen, dass das Wegzeichen dazu vorbereitet ist, ein Beleuchtungsfeld zu erzeugen und dessen Position in Abhängigkeit von einer Ortsangabe über einen eigenen Standort im Vergleich zu einer ersten Ortsangabe einer Mobilstation zu ändern. Hierfür kann eine digitale Karte genutzt werden, wobei dies nicht zwingend ist. Durch die Abhängigkeit der Position des Beleuchtungsfeldes werden verschiedene Lichtmarkierungen, die von verschiedenen Nutzern zu ihrem jeweils aufzusuchenden Objekt führen, räumlich stärker entkoppelt und für den einzelnen Nutzer besser verständlich.

Eine bevorzugte Ausführungsform sieht vor, dass das Wegzeichen eine Sendeeinheit zum Senden der empfangenen Aktivierungsaufforderung zu mindestens einem weiteren Wegzeichen aufweist. Hierdurch kann das Wegzeichen auch dazu verwendet werden, den Nutzer zu dem aufzufindenden Objekt zu leiten, wenn sich der Nutzer an Ort aufhält, der sich nicht innerhalb einer WLAN-Reichweite der Sendeeinheit des aufzufindenden Objekts befindet.

Von Vorteil ist, wenn das Wegzeichen ein Verzögerungsglied zum Verzögern des Sendens der empfangenen Aktivierungsaufforderung mit einer vorgegebenen Verzögerungszeit aufweist. Hierdurch kann auf einfache Weise ein Lauflichteffekt erzeugt werden, der dem Nutzer anzeigt, in welcher Richtung sich das aufzufindende Objekt befindet.

Besonders zweckmäßig ist, wenn die Aktivierungseinheit dazu vorbereitet ist, zu entscheiden, ob sie der Aktivierungsaufforderung Folge leistet, wobei sie dazu vorbereitet ist, bei der Entscheidungsfindung eine Ortsangabe über einen eigenen Standort im Vergleich zu einer ersten Ortsangabe einer Mobilstation und/oder einer zweiten Ortsangabe eines aufzufindenden Objekts zu berücksichtigen. Anhand der Ortsangaben kann die Aktivierungseinheit ermitteln und/oder berechnen, ob das Wegzeichen zu weit von dem direkten Weg zwischen Nutzer und aufzufindendem Objekt abliegt. Hierfür kann eine digitale Karte genutzt werden, wobei dies nicht zwingend ist. Falls das Wegzeichen zu weit von dem direkten Weg zwischen Nutzer und aufzufindendem Objekt abliegt, kann die Aktivierungseinheit ein Aktivieren der visuellen Anzeigeeinrichtung unterdrücken. Alternativ oder zusätzlich ist es auch vorstellbar, dass das Wegzeichen in diesem Fall ein Weiterleiten der Aktivierungsaufforderung an ein weiteres Wegzeichen unterdrückt.

Zweckmäßig ist, wenn das aufzufindende Objekt dazu vorbereitet ist, vor dem Senden der Aktivierungsaufforderung an ein Wegzeichen in die Aktivierungsaufforderung eine erste Ortsangabe einer Mobilstation, von der das aufzufindende Objekt die Heranführungsanforderung empfangen hat, einzufügen. Anhand der Ortsangaben kann das Wegzeichen oder eines der nachfolgenden weiteren Wegzeichen ermitteln und/oder berechnen, ob es zu weit von dem direkten Weg zwischen Nutzer und aufzufindendem Objekt abliegt. Hierfür kann eine digitale Karte genutzt werden, wobei dies nicht zwingend ist. Falls das weitere Wegzeichen oder das nachfolgende weitere Wegzeichen zu weit von dem direkten Weg zwischen Nutzer und aufzufindendem Objekt abliegt, kann es ein Aktivieren der visuellen Anzeigeeinrichtung und/oder eine eigene Weiterleitung der Aktivierungsaufforderung an ein weiteres Wegzeichen unterdrücken.

Das aufzufindende Objekt ist ein aufzufindendes geparktes Fahrzeug, ein aufzufindender Stellplatz, ein aufzufindender Raum. In der dritten Alternative kann die Erfindung zum Navigieren direkt nach einem Verlassen des Fahrzeugs genutzt werden.

Die vorliegende Erfindung wird nun anhand der beigefügten Zeichnungen näher erläutert. Dabei zeigen:
- Fig. 1: schematisch ein Anwendungsszenario mit einer Mobilstation, einem aufzufindenden Fahrzeug, zwei Wegzeichen und einem Fahrzeugnutzer mit einem Smartphone, der sich unter Hilfestellung des erfindungsgemäßen Verfahrens dem aufzufindenden Fahrzeug nähert;
- Fig. 2: schematisch eine Referenzkonfiguration der vorliegenden Erfindung mit einer Mobilstation, einem aufzufindenden Fahrzeug und zwei Wegzeichen; und
- Fig. 3: schematisch einen Ablauf eines Verfahrens zum Auffinden eines aufzufindenden Objekts.

Die nachfolgend näher beschriebenen Ausführungsbeispiele stellen bevorzugte Ausführungsformen der vorliegenden Erfindung dar.

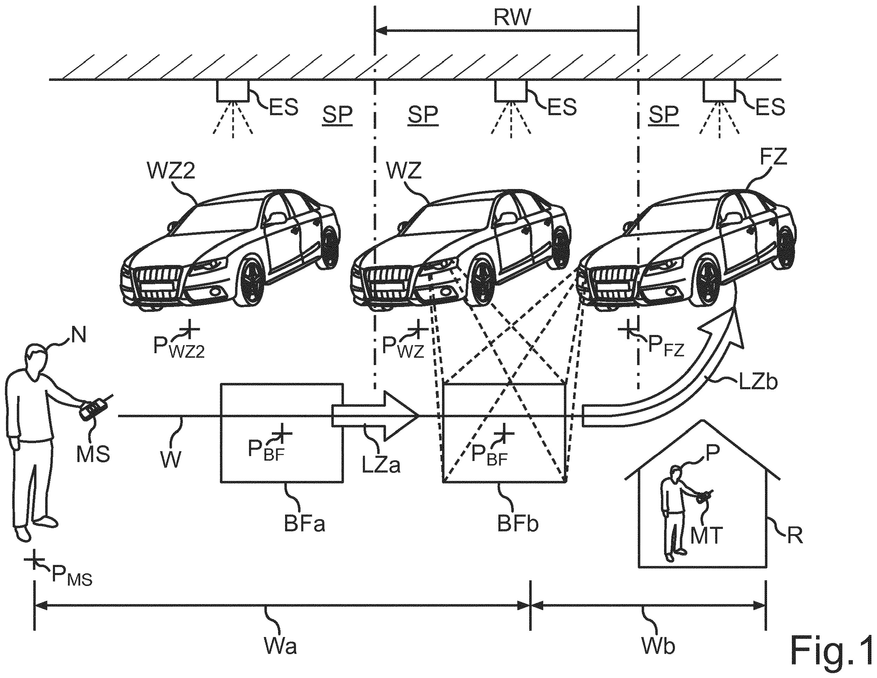

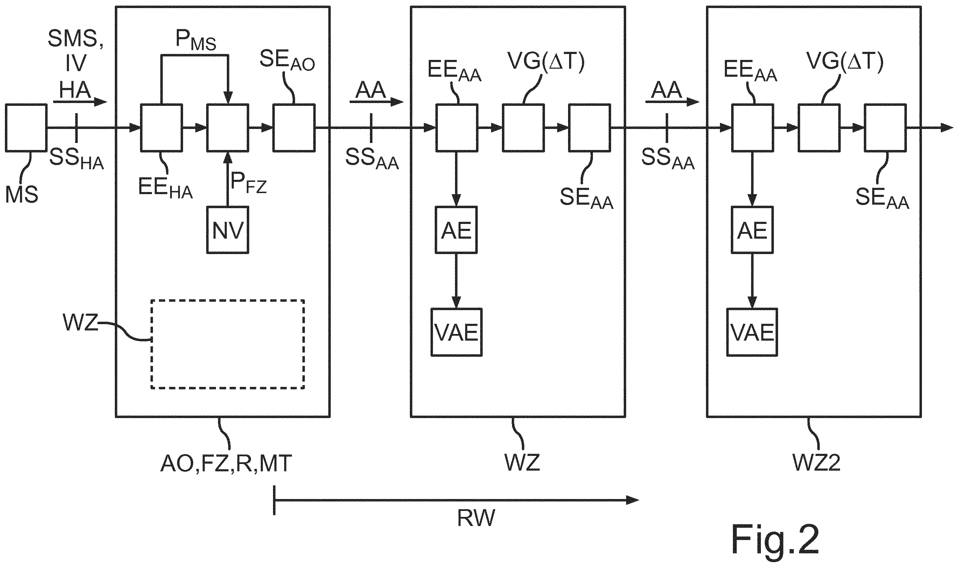

Das in Fig. 1 gezeigte Anwendungsszenario umfasst eine Mobilstation MS (beispielsweise ein Smartphone), ein aufzufindendes Fahrzeug FZ, ein Wegzeichen WZ, das sich innerhalb einer WLAN-Reichweite RW des aufzufindenden Fahrzeugs FZ befindet und ein weiteres Wegzeichen WZ2, das sich außerhalb einer WLAN-Reichweite RW des aufzufindenden Fahrzeugs FZ befindet. Unter WLAN-Reichweite RW wird hier eine Reichweite der Funksignale verstanden, die eine Sendeinheit SE_{AO} (siehe Fig. 2) des Fahrzeugs FZ für das Übermitteln einer Aktivierungsaufforderung AA (siehe Fig. 2) an das Wegzeichen WZ erzeugt.

Statt eines Fahrzeugs FZ kann das aufzufindende Objekt AO ein aufzufindender Stellplatz SP, ein aufzufindender Raum R. Die beschriebenen Überlegungen sind dann analog anwendbar. Wenn das aufzufindende Objekt AO ein aufzufindender Raum R ist, kann der Nutzer N die Erfindung direkt nach einem Verlassen des Fahrzeugs FZ zum Navigieren auf seinem Weg W zu einem Ziel nutzen.

Zweckmäßig ist, wenn das Fahrzeug FZ dazu vorbereitet ist, vor dem Senden der Aktivierungsaufforderung AA an das Wegzeichen WZ in die Aktivierungsaufforderung AA eine erste Ortsangabe P_{MS} einer Mobilstation MS, von der das aufzufindende Fahrzeug FZ eine Heranführungsanforderung HA (siehe Fig. 2) empfangen hat, und/oder eine zweite Ortsangabe P_{AO} des aufzufindenden Fahrzeugs FZ einzufügen. Anhand der eingefügten Ortsangaben P_{MS}, P_{AO} kann das Wegzeichen WZ oder eines der nachfolgenden weiteren Wegzeichen WZ2 ermitteln und/oder berechnen, ob es zu weit von dem direkten Weg W zwischen dem Nutzer N und dem aufzufindenden Fahrzeug FZ abliegt. Falls das weitere Wegzeichen WZ2 oder ein nachfolgendes weiteres Wegzeichen WZ2 zu weit von dem direkten Weg W zwischen dem Nutzer N und dem aufzufindenden Fahrzeug FZ abliegt, kann es ein Aktivieren der visuellen Anzeigeeinrichtung VAE (siehe Fig. 2) und/oder eine eigene Weiterleitung der Aktivierungsaufforderung AA an ein weiteres Wegzeichen WZ2 unterdrücken.

In dem in der Figur gezeigten zeitlichen Ablauf einer gezielten Ausleuchtung eines Wegs W für einen Fahrzeugnutzer N befindet sich der Fahrzeugnutzer N zunächst noch in einem Wegabschnitt Wa und nach stärkerer Annäherung an das aufzufindende Fahrzeug FZ in einem Wegabschnitt Wb. Der Wegabschnitt Wa liegt also in einer größeren Entfernung zum aufzufindenden Fahrzeug FZ als der Wegabschnitt Wb. Solange sich der Fahrzeugnutzer N in dem Wegabschnitt Wa aufhält, wird das aufzufindende Fahrzeug FZ (beispielsweise mittels Blinker, Fernlicht und/oder Innenbeleuchtung) möglichst hell beleuchtet. Zukünftig ist auch vorstellbar, dass das Beleuchten des aufzufindenden Fahrzeugs N mittels einer innovativen Art von Lichtquelle (beispielsweise mittels flächenstrahlenden Karosserieteilen in OLED-Technologie, OLED = organic light emitting diode) erfolgt. Eine weitere Möglichkeit, das aufzufindende Fahrzeug FZ (vorzugsweise einen oberen Teil desselben) möglichst hell zu beleuchten, besteht darin, das aufzufindende Fahrzeug FZ alternativ oder zusätzlich mittels umgebender Lichtquellen (beispielsweise von umgebenden Fahrzeugen FZ und/oder von umgebenden Wegzeichen WZ, WZ2, beispielsweise mittels einer Platzleuchte eines Einzelplatzerfassungssensors ES) zu beleuchten. Sobald der Fahrzeugnutzer N den Wegabschnitt Wb erreicht hat, kann eine Intensität der Beleuchtung des aufzufindenden Fahrzeugs FZ verringert werden.

Alternativ oder zusätzlich kann der Bereich des Weges W, in dem sich der Fahrzeugnutzer N gerade befindet, sektorweise (beispielsweise mittels Lichtquellen von anderen, d.h. nicht aufzufindenden Fahrzeugen und/oder mittels Wegzeichen WZ, die kein Fahrzeug sind) ausgeleuchtet werden. Dies beinhaltet für den Fahrzeugnutzer N eine deutliche Komfortverbesserung, weil er so mehr Gewissheit über den Untergrund erhält, auf den er seine Schritte setzt. Das Wegzeichen WZ, WZ2 ändert dann das Beleuchtungsfeld BFa, BFb und dessen Position P_{BF} in Abhängigkeit von einer Ortsangabe Pwz über einen eigenen Standort im Vergleich zu der ersten P_{MS} und/oder der zweiten P_{AO} Ortsangabe. Hierdurch können auch Lichtmarkierungen LZa, LZb, die verschiedene Nutzer N zu ihrem jeweils aufzusuchenden Fahrzeug FZ führen, weitgehend räumlich entkoppelt werden und für den einzelnen Nutzer N besser verständlich sein.

Unabhängig davon kann auf einem Abschnitt des Weges W, der direkt vor dem Fahrzeugnutzer N liegt, ein Navigationspfeil LZa, LZb projiziert werden (beispielsweise mittels eines rasterbasierten LED- oder eines Laser-Scheinwerfers, mittels einer Platzleuchte eines Einzelplatzerfassungssensors ES oder mittels eines Beleuchtungssystems, das in den Parkplatz- oder in den Parkhausboden eingelassen ist). Vorzugsweise kann das Wegzeichen WZ, WZ2 ein Beleuchtungsfeld BFa, BFb (oder eine Lichtmarkierung LZa, LZb) erzeugen, dessen Form von einer Ortsangabe Pwz, P_{WZ2} über einen eigenen Standort im Vergleich zu der ersten P_{MS} und/oder der zweiten P_{AO} Ortsangabe abhängig ist. Erfindungsgemäß, erzeugt das Wegzeichen WZ, WZ2 ein Beleuchtungsfeld BFa, BFb, dessen bzw. deren Orientierung von einer Ortsangabe Pwz, P_{WZ2} über einen eigenen Standort im Vergleich zu der ersten P_{MS} und/oder der zweiten P_{AO} Ortsangabe abhängig ist. Hierdurch kann mittels des Beleuchtungsfeldes BF für den Nutzer N nicht nur der Weg W zum aufzufindenden Fahrzeug FZ beleuchtet werden, sondern auch eine Richtung zum aufzufindenden Fahrzeug FZ deutlicher angezeigt werden.

Die in Fig. 2 gezeigte Referenzkonfiguration umfasst eine Mobilstation MS, ein aufzufindendes Objekt AO, ein Wegzeichen WZ, das sich innerhalb einer WLAN-Reichweite RW des aufzufindenden Objekts AO befindet, und ein weiteres Wegzeichen WZ2, das sich außerhalb einer WLAN-Reichweite RW des aufzufindenden Objekts AO befindet.

Unter Voraussetzungen, die im Folgenden erläutert werden, übermittelt das Wegzeichen WZ die übermittelte Aktivierungsaufforderung AA zu mindestens einem weiteren Wegzeichen WZ2, das sich nicht innerhalb einer WLAN-Reichweite RW der Sendeeinheit SE des aufzufindenden Fahrzeugs FZ befindet. Hierdurch kann das Wegzeichen WZ auch dazu verwendet werden, den Nutzer N zu dem aufzufindenden Fahrzeug FZ zu leiten, wenn sich der Nutzer N an Ort P_{MS} aufhält, der sich nicht innerhalb einer WLAN-Reichweite RW der Sendeeinheit SE_{AO} des aufzufindenden Fahrzeugs FZ befindet.

Die Aktivierungseinrichtung AE des Wegzeichens WZ oder des weiteren Wegzeichens WZ2 entscheidet für jede Aktivierungsaufforderung AA, ob es ihr Folge leistet, und berücksichtigt bei der Entscheidungsfindung eine Ortsangabe Pwz, P_{WZ2} über einen eigenen Standort im Vergleich zu der ersten P_{MS} und/oder der zweiten P_{AO} Ortsangabe. Anhand der Ortsangaben P_{MS}, P_{AO} kann das Wegzeichen WZ beziehungsweise das weitere Wegzeichen WZ2 ermitteln und/oder berechnen, ob es zu weit von dem direkten Weg W zwischen Nutzer N und dem aufzufindenden Fahrzeug FZ abliegt. Falls das Wegzeichen WZ oder das weitere Wegzeichen WZ2 zu weit von dem direkten Weg W zwischen Nutzer N und dem aufzufindenden Fahrzeug FZ abliegt, kann es eine Aktivierung seiner visuellen Anzeigeeinrichtung VAE durch die Aktivierungsaufforderung AA unterdrücken, um dem Nutzer N eine klarere Vorstellung darüber zu geben, in welcher Richtung sich das aufzufindende Fahrzeug FZ befindet.

Das Wegzeichen WZ, WZ2 kann ein Verzögerungsglied VG zum Verzögern des Sendens der empfangenen Aktivierungsaufforderung AA mit einer vorgegebenen Verzögerungszeit ΔT aufweisen. Hierdurch kann auf einfache Weise ein Lauflichteffekt erzeugt werden, der dem Nutzer N anzeigt, in welcher Richtung sich das aufzufindende Fahrzeug FZ befindet.

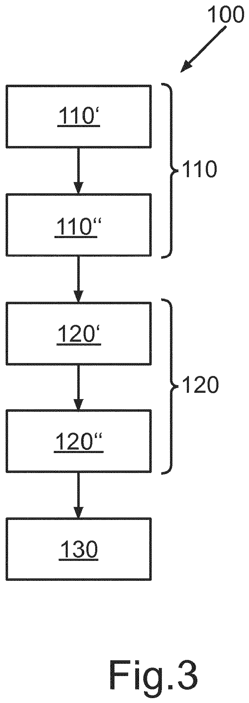

Das in Fig. 3 gezeigte Verfahren 100 zum Auffinden eines aufzufindenden Objekts AO weist folgende Verfahrensschritte auf. In einem ersten Schritt 110 wird eine Heranführungsaufforderung HA von einer Mobilstation MS an das aufzufindende Objekt AO mittels einer Kurznachricht SMS oder mittels einer mobilen Internetverbindung IV übermittelt. In einem zweiten Schritt 120 wird mittels eines WLAN-Protokolls eine Aktivierungsaufforderung AA von dem aufzufindenden Objekt AO an mindestens ein Wegzeichen WZ übermittelt. In einem dritten Schritt 130 wird eine visuelle Anzeigeeinrichtung VAE des mindestens einen Wegzeichens WZ aktiviert.

## Patentansprüche

1. Aufzufindendes Objekt (AO), welches ein aufzufindendes geparktes Fahrzeug (FZ), ein aufzufindender Stellplatz (SP) oder ein aufzufindender Raum (R) ist, mit:
- einem Wegzeichen (WZ, WZ2), wobei das Wegzeichen (WZ, WZ2) eine visuelle Anzeigeeinrichtung (VAE), eine Empfangseinheit (EEAA) zum Empfangen (120") einer Aktivierungsaufforderung (AA) mittels eines WLAN-Protokolls der IEEE 802.11 Familie und eine Aktivierungseinheit (AE) zum Aktivieren (130) der visuellen Anzeigeeinrichtung (VAE) aufweist;
- einer Empfangseinheit (EE_{HA}) zum Empfangen (110") einer Heranführungsaufforderung (HA) von einer Mobilstation (MS) mittels einer Kurznachricht (SMS) oder einer mobilen Internetverbindung (IV) und eine Sendeeinheit (SE_{AA}) zum Senden (120') der Aktivierungsaufforderung (AA) mittels des WLAN-Protokolls der IEEE 802.11 Familie an mindestens ein Wegzeichen (WZ), wobei
- das Wegzeichen (WZ, WZ2) dazu vorbereitet ist, ein Beleuchtungsfeld (BFa, BFb) auf einen Weg zu projizieren, wobei eine Orientierung des Beleuchtungsfelds (BFa, BFb) von einer Ortsangabe (Pwz, P_{WZ2}) über einen eigenen Standort im Vergleich zu einer ersten Ortsangabe (P_{MS}) der Mobilstation (MS) abhängig ist, und das Wegzeichen (WZ, WZ2) dazu vorbereitet ist, eine Position (P_{BF}) des Beleuchtungsfeldes (BFa, BFb) in Abhängigkeit von der Ortsangabe (Pwz, P_{WZ2}) über den eigenen Standort im Vergleich zu der ersten Ortsangabe (P_{MS}) der Mobilstation (MS) zu ändern.

2. Aufzufindendes Objekt (AO) nach dem vorhergehenden Anspruch, **dadurch gekennzeichnet, dass** das Wegzeichen (WZ, WZ2) ein Verzögerungsglied (VG) zum Verzögern des Sendens (120') der empfangenen Aktivierungsaufforderung (AA) mit einer vorgegebenen Verzögerungszeit (ΔT) aufweist.

3. Aufzufindendes Objekt (AO) nach einem der vorhergehenden Ansprüche, **dadurch gekennzeichnet, dass** die Aktivierungseinheit (AE) dazu vorbereitet ist, zu entscheiden, ob sie der Aktivierungsaufforderung (AA) Folge leistet, wobei sie dazu vorbereitet ist, bei der Entscheidungsfindung die Ortsangabe (Pwz, P_{WZ2}) über den eigenen Standort im Vergleich zu der ersten Ortsangabe (P_{MS}) der Mobilstation (MS) zu berücksichtigen.

4. Aufzufindendes Objekt (AO) nach einem der vorhergehenden Ansprüche, **dadurch gekennzeichnet, dass** das Wegzeichen (WZ, WZ2) dazu vorbereitet ist, ein Beleuchtungsfeld (BFa, BFb) zu erzeugen, dessen Form von der Ortsangabe (Pwz, P_{WZ2}) über den eigenen Standort im Vergleich zu der ersten Ortsangabe (P_{MS}) der Mobilstation (MS) abhängig ist.

5. Aufzufindendes Objekt (AO) nach einem der vorhergehenden Ansprüche, **dadurch gekennzeichnet, dass** es dazu vorbereitet ist, vor dem Senden (120') der Aktivierungsaufforderung (AA) an ein Wegzeichen (WZ) in die Aktivierungsaufforderung (AA) die erste Ortsangabe (P_{MS}) der Mobilstation (MS), von der das aufzufindende Objekt (AO) die Heranführungsanforderung (HA) empfangen hat, einzufügen.

6. Verfahren (100) zum Auffinden eines aufzufindenden Objekts (AO), welches ein aufzufindendes geparktes Fahrzeug (FZ), ein aufzufindender Stellplatz (SP) oder ein aufzufindender Raum (R) ist, wobei das Verfahren (100) Folgendes aufweist:
- Übermitteln (110) einer Heranführungsaufforderung (HA) von einer Mobilstation (MS) an das aufzufindende Objekt (AO) mittels einer Kurznachricht (SMS) oder mittels einer mobilen Internetverbindung (IV);
- Übermitteln (120) einer Aktivierungsaufforderung (AA) von dem aufzufindenden Objekt (AO) an mindestens ein Wegzeichen (WZ) mittels eines WLAN-Protokolls der IEEE 802.11 Familie; und
- Aktivieren (130) einer visuellen Anzeigeeinrichtung (VAE) des mindestens einen Wegzeichens (WZ), wobei
- mittels des Wegzeichens (WZ, WZ2) ein Beleuchtungsfeld (BFa, BFb) auf einen Weg projiziert wird, wobei eine Orientierung des Beleuchtungsfelds (BFa, BFb) von einer Ortsangabe (Pwz, P_{WZ2}) über einen eigenen Standort im Vergleich zu einer ersten Ortsangabe (P_{MS}) einer Mobilstation (MS) und einer zweiten Ortsangabe (P_{AO}) des aufzufindenden Objekts (AO) abhängig ist und eine Position (P_{BF}) des Beleuchtungsfeldes (BFa, BFb) in Abhängigkeit von der Ortsangabe (Pwz, P_{WZ2}) über den eigenen Standort im Vergleich zu der ersten Ortsangabe (P_{MS}) der Mobilstation (MS) geändert wird.

7. Verfahren nach Anspruch 6, wobei bei dem Projizieren des Beleuchtungsfeldes (BFa, BFb) mittels des Wegzeichens (WZ, WZ2) eine Form des Beleuchtungsfelds (BFa, BFb) von einer Ortsangabe (Pwz, P_{WZ2}) über den eigenen Standort im Vergleich zu der ersten Ortsangabe (P_{MS}) der Mobilstation (MS) abhängig ist.

## Claims

1. An object (AO) to be located, which is a parked vehicle (FZ) to be located, a parking space (SP) to be located or a room (R) to be located, comprising:
- a signpost (WZ, WZ2), wherein the signpost (WZ, WZ2) comprises a visual display device (VAE), a receiving unit (EEAA) for receiving (120") an activation request (AA) by means of a WLAN protocol of the IEEE 802.11 family and an activation unit (AE) for activating (130) the visual display device (VAE);
- a receiving unit (EE_{HA}) for receiving (110") a leading request (HA) from a mobile station (MS) by means of a short message (SMS) or a mobile Internet link (IV) and a transmitting unit (SE_{AA}) for transmitting (120') the activation request (AA) by means of the WLAN protocol of the IEEE 802.11 family to at least one signpost (WZ), wherein
- the signpost (WZ, WZ2) is prepared to project an illumination field (BFa, BFb) onto a way, wherein an orientation of the illumination field (BFa, BFb) is dependent on a location indication (Pwz, P_{WZ2}) about an own site compared to a first location indication (P_{MS}) of the mobile station (MS), and the signpost (WZ, WZ2) is prepared to change a position (P_{BF}) of the illumination field (BFa, BFb) depending on the location indication (Pwz, P_{WZ2}) about the own site compared to the first location indication (P_{MS}) of the mobile station (MS).

2. The object (AO) to be located according to the preceding claim, **characterized in that** the signpost (WZ, WZ2) comprises a delay member (VG) for delaying the transmission (120') of the received activation request (AA) by a preset delay time (ΔT).

3. The object (AO) to be located according to any one of the preceding claims, **characterized in that** the activation unit (AE) is prepared to decide whether it complies with the activation request (AA), wherein it is prepared to consider the location indication (Pwz, P_{WZ2}) about the own site compared to the first location indication (P_{MS}) of the mobile station (MS) in making the decision.

4. The object (AO) to be located according to any one of the preceding claims, **characterized in that** the signpost (WZ, WZ2) is prepared to generate an illumination field (BFa, BFb), the shape of which is dependent on the location indication (Pwz, P_{WZ2}) about the own site compared to the first location indication (P_{MS}) of the mobile station (MS).

5. The object (AO) to be located according to any one of the preceding claims, **characterized in that** it is prepared to insert the first location indication (P_{MS}) of the mobile station (MS), from which the object (AO) to be located has received the leading request (HA), into the activation request (AA) before transmitting (120') the activation request (AA) to a signpost (WZ).

6. A method (100) for locating an object (AO) to be located, which is a parked vehicle (FZ) to be located, a parking space (SP) to be located or a room (R) to be located, wherein the method (100) comprises the following:
- transferring (110) a leading request (HA) from a mobile station (MS) to the object (AO) to be located by means of a short message (SMS) or by means of a mobile Internet link (IV);
- transferring (120) an activation request (AA) from the object (AO) to be located to at least one signpost (WZ) by means of a WLAN protocol of the IEEE 802.11 family; and
- activating (130) a visual display device (VAE) of the at least one signpost (WZ), wherein
- an illumination field (BFa, BFb) is projected onto a way by means of the signpost (WZ, WZ2), wherein an orientation of the illumination field (BFa, BFb) is dependent on a location indication (Pwz, P_{WZ2}) about an own site compared to a first location indication (P_{MS}) of a mobile station (MS) and a second location indication (P_{AO}) of the object (AO) to be located, and a position (P_{BF}) of the illumination field (BFa, BFb) is changed depending on the location indication (Pwz, P_{WZ2}) about the own site compared to the first location indication (P_{MS}) of the mobile station (MS).

7. The method according to claim 6, wherein in protecting the illumination field (BFa, BFb) by means of the signpost (WZ, WZ2), a shape of the illumination field (BFa, BFb) is dependent on a location indication (Pwz, P_{WZ2}) about the own site compared to the first location indication (P_{MS}) of the mobile station (MS).

## Revendications

1. Objet à rechercher (AO), qui est un véhicule stationné à rechercher (FZ), une place de stationnement à rechercher (SP) ou une pièce à rechercher (R), avec :
- un indicateur de trajet (WZ, WZ2), l'indicateur de trajet (WZ, WZ2) comportant un dispositif d'affichage visuel (VAE), une unité de réception (EEAA) pour recevoir (120") une demande d'activation (AA) au moyen d'un protocole WLAN de la famille IEEE 802.11 et une unité d'activation (AE) pour activer (130) le dispositif d'affichage visuel (VAE) ;
- une unité de réception (EE_{HA}) pour recevoir (110") une demande de rapprochement (HA) d'une station mobile (MS) au moyen d'un mini-message (SMS) ou d'une connexion Internet mobile (IV), et une unité d'envoi (SE_{AA}) pour envoyer (120') la demande d'activation (AA) au moyen du protocole WLAN de la famille IEEE 802.11 à au moins un indicateur de trajet (WZ),
- l'indicateur de trajet (WZ, WZ2) étant préparé pour projeter un champ d'éclairage (BFa, BFb) sur un trajet, une orientation du champ d'éclairage (BFa, BFb) étant dépendante d'une indication de lieu (Pwz, P_{WZ2}) concernant une position particulière par rapport à une première indication de lieu (P_{MS}) de la station mobile (MS), et l'indicateur de trajet (WZ, WZ2) étant préparé pour changer une position (P_{BF}) du champ d'éclairage (P_{MS}) en fonction de l'indication de lieu (Pwz, P_{WZ2}) concernant la position particulière par rapport à la première indication de lieu (P_{MS}) de la station mobile (MS).

2. Objet à rechercher (AO) selon la revendication précédente, **caractérisé en ce que** l'indicateur de trajet (WZ, WZ2) comporte un élément retardateur (VG) pour retarder l'envoi (120') de la demande d'activation reçue (AA) avec un temps de retard prédéterminé (ΔT).

3. Objet à rechercher (AO) selon l'une des revendications précédentes, **caractérisé en ce que** l'unité d'activation (AE) est préparée pour décider si elle donne suite à la demande d'activation (AA), l'unité étant préparée pour tenir compte, lors de la prise de décision, de l'indication de lieu (Pwz, P_{WZ2}) concernant la position particulière par rapport à la première indication de lieu (P_{MS}) de la station mobile (MS).

4. Objet à rechercher (AO) selon l'une des revendications précédentes, **caractérisé en ce que** l'indicateur de trajet (WZ, WZ2) est préparé pour générer un champ d'éclairage (BFa, BFb) dont la forme est dépendante de l'indication de lieu (Pwz, P_{WZ2}) concernant la position particulière par rapport à la première indication de lieu (P_{MS}) de la station mobile (MS).

5. Objet à rechercher (AO) selon l'une des revendications précédentes, **caractérisé en ce qu'**il est préparé pour insérer dans la demande d'activation (AA) la première indication de lieu (P_{MS}) de la station mobile (MS) à partir de laquelle l'objet à rechercher (AO) a reçu la demande de rapprochement (HA), avant d'envoyer (120') la demande d'activation (AA) à un indicateur de trajet (WZ).

6. Procédé (100) pour rechercher un objet à rechercher (AO), qui est un véhicule stationné à rechercher (FZ), une place de stationnement à rechercher (SP) ou une pièce à rechercher (R), le procédé (100) comportant les étapes suivantes :
- transmettre (110) une demande de rapprochement (HA) d'une station mobile (MS) à l'objet à rechercher (AO) au moyen d'un mini-message (SMS) ou au moyen d'une connexion Internet mobile (IV);
- transmettre (120) une demande d'activation (AA) de l'objet à rechercher (AO) à au moins un indicateur de trajet (WZ) au moyen d'un protocole WLAN de la famille IEEE 802.11 ; et
- activer (130) un dispositif d'affichage visuel (VAE) du au moins un indicateur de trajet (WZ),
- un champ d'éclairage (BFa, BFb) est projeté sur un trajet au moyen de l'indicateur de trajet (WZ, WZ2), une orientation du champ d'éclairage (BFa, BFb) étant dépendante d'une indication de lieu (Pwz, P_{WZ2}) concernant une position particulière par rapport à une première indication de lieu (P_{MS}) d'une station mobile (MS) et d'une seconde indication de lieu (P_{AO}) de l'objet à rechercher (AO), et une position (P_{BF}) du champ d'éclairage (P_{AO}) étant changée en fonction de l'indication de lieu (Pwz, P_{WZ2}) concernant la position particulière par rapport à la première indication de lieu (P_{MS}) de la station mobile (MS).

7. Procédé selon la revendication 6, dans lequel, lors de la projection du champ d'éclairage (BFa, BFb) au moyen de l'indicateur de trajet (WZ, WZ2), une forme du champ d'éclairage (BFa, BFb) est dépendante d'une indication de lieu (Pwz, P_{WZ2}) concernant la position particulière par rapport à la première indication de lieu (P_{MS}) de la station mobile (MS).
